# EUROPÄISCHE PATENTSCHRIFT

(11) **EP 2 310 457 B1**
(45) Veröffentlichungstag und Bekanntmachung des Hinweises auf die Patenterteilung: **27.03.2013**
(21) Anmeldenummer: 09781189.7
(22) Anmeldetag: 28.07.2009
(51) Int. Cl.: C08L 83/04, B29C 71/02

(54) **VERFAHREN ZUR HERSTELLUNG VON FORMKÖRPERN AUS SILIKONKAUTSCHUK**
METHOD FOR MANUFACTURING MOLDED BODIES FROM SILICONE RUBBER
PROCÉDÉ POUR PRODUIRE DES CORPS MOULÉS À PARTIR DE CAOUTCHOUC DE SILICONE

(30) Priorität: 08.08.2008 DE 102008041121
(43) Veröffentlichungstag der Anmeldung: 20.04.2011
(73) Patentinhaber: Wacker Chemie AG, 81737 München (DE)
(72) Erfinder: SCHUSTER, Johann, 84547 Emmerting (DE); FRESE, Thomas, 84489 Burghausen (DE); ROTHENAICHER, Reinhard, 84524 Neuötting (DE)
(74) Vertreter: Budczinski, Angelika
(86) Internationale Anmeldenummer: PCT/EP2009/059741
(87) Internationale Veröffentlichungsnummer: WO 2010/015547

(56) Entgegenhaltungen:
- WO-A-2007/064777
- DE-A1- 19 634 971

## Beschreibung

Die vorliegende Erfindung betrifft ein Verfahren zur Herstellung von Formkörpern aus Silikonkautschuk durch Vernetzung und anschließendem Tempern.

Die Herstellung von Silikonkautschukartikeln aus vernetzbaren Siloxanmassen ist seit langem bekannt, wobei unterschiedliche Vernetzungssysteme und Ausgangsstoffe zur Verfügung stehen. Die Herstellung von Silikonkautschukartikeln erfolgt durch Vernetzung der entsprechenden Siliconmassen. Nach dieser Vernetzung ist es für viele Anwendungen vorteilhaft, die erhaltenen Formteile mit Wärme zu behandeln, d.h. zu tempern, um unerwünschte flüchtige Stoffe, wie z.B. cyclische Siloxane, zu entfernen. Das Tempern von Siliconkautschuken, vor allem den additionsvernetzbaren Systemen, findet im Allgemeinen in Anwesenheit von Luft bzw. Sauerstoff statt, da beim Tempern Reaktionen mit Sauerstoff ablaufen. Hierzu sei beispielsweise auf DE-A 19634971 verwiesen. Das Tempern findet in der Regel über mehrere Stunden bei Temperaturen um 200°C und unter Normaldruck statt. Durch das Ausgasen flüchtiger Verbindungen entsteht häufig ein Sicherheits- und Emissionsproblem. Um den Prozess sicher gestalten zu können und das Auftreten zündfähiger Gemische zu vermeiden, wird mit hohen Luftdurchsätzen durch den Ofen gearbeitet, was zum einen einen erhöhten Energiebedarf erfordert und zum anderen die flüchtigen Bestandteile so verdünnt, dass eine Abgasreinigung nahezu unmöglich ist. Dies wiederum hat zur Folge, dass bei Verfahren in technischem Maßstab häufig Luft-Grenzwerte nur erschwert eingehalten werden können.

Gegenstand der Erfindung ist ein Verfahren zur Herstellung von Formkörpern aus Silikonkautschuk durch Vernetzung von Massen auf der Basis von Organosiliciumverbindungen und anschließendem Tempern der erhaltenen Formkörper, dadurch gekennzeichnet, dass das Tempern bei einem Druck von kleiner 150 hPa durchgeführt wird.

Bei den erfindungsgemäß eingesetzten Massen kann es sich um beliebige, bisher bekannte Typen von zu Elastomeren vernetzbaren Massen auf der Basis von Organosiliciumverbindungen handeln, wie beispielsweise einkomponentige oder zweikomponentige bei Raumtemperatur (sog. RTV-Massen) oder erhöhter Temperatur (sog. LSR- oder HTV-Massen) vulkanisierbare Organopolysiloxanmassen, wobei die Vernetzung durch Kondensation, Anlagerung von Si-gebundenem Wasserstoff an aliphatische Mehrfachbindung, durch Strahlung oder peroxidisch durch Bildung von Radikalen erfolgen kann. Die vernetzbaren Massen können dabei frei von Füllstoffen sein, können aber auch aktive oder nicht aktive Füllstoffe enthalten.

Art und Menge der üblicherweise in solchen Massen verwendeten Komponenten sind bereits bekannt. Hierzu sei beispielsweise auf US-A 5,268,441, DE-A 44 01 606, DE-A 44 05 245 und DE-A 43 36 345 verwiesen.

Bevorzugt handelt es sich bei den erfindungsgemäß eingesetzten Massen um durch Additionsreaktion vernetzbare Massen, peroxidisch venetzbare Massen und strahlungsvernetzbare Massen.

Die erfindungsgemäß eingesetzten Massen können auf bisher bekannte Weise vernetzt (vulkanisiert) werden. Dabei können als Herstellverfahren alle gängigen Prozesse zur Verarbeitung von Siliconkautschuken angewandt werden. Beispiele hierfür sind Kalandrieren, Formpressen, Formspritzen, Extrudieren und Gießen.

Bei den erfindungsgemäß hergestellten Formkörpern kann es sich dabei um beliebige Formkörper, wie beispielsweise Profile, Schläuche, Schnuller, Zündkerzenstecker, Siliconkabel und Beschichtungen, handeln.

Bei dem erfindungsgemäßen Verfahren werden die durch Vernetzung erhaltenen Formkörper getempert. Dieses Tempern erfolgt vorzugsweise direkt nach dem Vernetzungsschritt in einem Temperofen. Das Ende des Vernetzungsschritts ist dem Fachmann bekannt und wird in der Regel durch den jeweiligen Verarbeitungsprozess definiert; beim Spritzguss beispielsweise ist dies direkt nach dem Auswerfen aus der Form, bei der Extrusion nach dem Verlassen des Heizkanals. Am Ende des Vernetzungsschritts beträgt der Vernetzungsgrad bevorzugt 90 bis 97 %. Beim erfindungsgemäßen Temperschritt kann dann der Vernetzungsgrad bis 100 % erhöht werden.

Bevorzugt wird das erfindungsgemäße Tempern bei einem Druck von 10 bis 150 hPa, besonders bevorzugt bei 50 bis 100 hPa, durchgeführt.

Bevorzugt wird das erfindungsgemäße Tempern bei einer Temperatur von 20 bis 350°C, besonders bevorzugt bei 50 bis 250°C, insbesondere bei 150 bis 200°C, durchgeführt.

Bevorzugt wird das erfindungsgemäße Tempern, insbesondere wenn additionsvernetzbare Massen eingesetzt werden, in Anwesenheit von Sauerstoff, insbesondere Luftsauerstoff, durchgeführt.

Bei dem erfindungsgemäßen Verfahren betragen die Temperzeiten bevorzugt 0,5 bis 6 Stunden, besonders bevorzugt 2 bis 4 Stunden.

Bevorzugt beträgt der Vernetzungsgrad der erfindungsgemäß hergestellten Formkörper 95 bis 100 %, besonders bevorzugt über 97 %. Der Vernetzungsgrad hängt in erster Linie von den gewählten Temperbedingungen ab. Welcher Vernetzungsgrad bei dem erfindungsgemäßen Verfahren erreicht werden soll, hängt primär von der Anwendung des Formkörpers sowie von ökonomischen Gesichtspunkten ab.

Bei einer bevorzugten Ausführungsform des erfindungsgemäßen Verfahrens werden Massen auf der Basis von Organosiliciumverbindungen, ausgewählt aus durch Additionsreaktion vernetzbaren Massen, peroxidisch vernetzbaren Massen sowie strahlungsvernetzbaren Massen vernetzen gelassen und die so erhaltenen Formkörper anschließend bei einem Druck von kleiner 150 hPa und einer Temperatur von 20 bis 350°C getempert.

Falls es sich bei den im erfindungsgemäßen Verfahren eingesetzten Massen um additionsvernetzbare Massen handelt, sind solche enthaltend
(1) Organosiliciumverbindungen, die SiC-gebundene Reste mit aliphatischen Kohlenstoff-Kohlenstoff-Mehrfachbindungen aufweisen,
(2) Organosiliciumverbindungen mit Si-gebundenen Wasserstoffatomen oder anstelle von (1) und (2)
(3) Organosiliciumverbindungen, die SiC-gebundene Reste mit aliphatischen Kohlenstoff-Kohlenstoff-Mehrfachbindungen und Sigebundene Wasserstoffatome aufweisen,
(4) die Anlagerung von Si-gebundenem Wasserstoff an aliphatische Mehrfachbindung fördernden Katalysator
   und gegebenenfalls
(5) weitere Stoffe
bevorzugt.

Die im erfindungsgemäßen Verfahren eingesetzten, durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa.

Falls es sich bei den im erfindungsgemäßen Verfahren eingesetzten Massen um peroxidisch vernetzbare Massen handelt, sind solche enthaltend
(A) Organosiloxane,
(B) die Vernetzung über freie Radikale bewirkendes Agens
   und gegebenenfalls
(C) weitere Stoffe
bevorzugt.

Die erfindungsgemäß eingesetzten peroxidisch vernetzbaren Massen können bei den gleichen Bedingungen vernetzen gelassen werden wie die bisher bekannten peroxidisch vernetzbaren Massen, bevorzugt bei 150 bis 300°C und dem Druck der umgebenden Atmosphäre, also bei etwa 900 bis 1100 hPa. Es können aber auch Drücke bis zu 40 000 hPa angewendet werden.

Falls es sich bei den im erfindungsgemäßen Verfahren eingesetzten Massen um strahlungsvernetzbare Massen handelt, sind solche enthaltend
(i) Acrylat- und/oder Vinylgruppen aufweisende Organopolysiloxane,
   gegebenenfalls
(ii) mindestens einen Vernetzer,
(iii) einen Photopolymerisationsinitiator,
   gegebenenfalls
(iv) Polymerisationsinhibitoren und
   gegebenenfalls
(v) weitere Stoffe ausgewählt aus der Gruppe enthaltend Füllstoffe, Haftvermittler, Weichmacher, Stabilisatoren, Antioxidantien, Flammschutzmittel, Lichtschutzmittel und Pigmente.

Die erfindungsgemäß eingesetzten Massen können durch Bestrahlen mit Ultraviolettlicht (UV-Licht), Laser oder Sonnenlicht vernetzen gelassen werden. Vorzugsweise werden die erfindungsgemäßen Massen durch UV-Licht vernetzen gelassen. Als UV-Licht ist solches mit Wellenlängen im Bereich von 200 bis 400 nm bevorzugt. Das UV-Licht kann z.B. in Xenon-, Quecksilbernieder-, Quecksilbermittel-, Quecksilberhochdrucklampen oder Eximerlampen erzeugt werden. Zur Vernetzung durch Licht ist auch solches mit einer Wellenlänge von 400 bis 600 nm, also so genanntes "Halogenlicht", geeignet.

Die Bestrahlungswellenlängen und -dauern sind auf die verwendeten Photopolymerisationsinitiatoren und die zu polymerisierenden Verbindungen abgestimmt.

Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Bei einer besonders bevorzugten Ausführungsform des erfindungsgemäßen Verfahrens werden die Abgase aus dem Temperofen über einen Wasserwäscher gereinigt. Dieser wird bevorzugt mit Wasser betrieben, das im Kreis geführt und gekühlt wird. Ein Großteil der organischen Komponenten kondensiert dabei im kalten Wasser und kann als organische Phase über einen Koaleszor in flüssiger Form abgetrennt werden. Das erfindungsgemäße Verfahren hat den Vorteil, dass Emissionen nicht von der Luft ins Wasser verlagert, sondern definitiv reduziert werden. Die abgetrennten Kondensate können - falls erwünscht - nach bekannten Verfahren aufgearbeitet werden.

Bei dem erfindungsgemäßen Verfahren wird bevorzugt sauerstoffhaltiges Gas, vorzugsweise Luft, in den Temperofen geblasen, wobei ein Volumenstrom von 0,1 bis 10 Nm³/h bei einem Ofenvolumen von 2 m³ bevorzugt ist. Bei kleineren Öfen ist der bevorzugte Volumenstrom kleiner, bei größeren Öfen entsprechend größer zu bemessen. Dadurch werden die beim Tempervorgang entstehenden flüchtigen organischen Bestandteile ausgetragen. In technischen Anlagen wird der bevorzugte Volumenstrom an sauerstoffhaltigem Gas häufig durch Leckagen in der Anlage erreicht.

Bei dem erfindungsgemäßen Verfahren wird ein Luftdurchsatz von 0,1 bis 10 Nm³/h bei eim Ofenvolumen von 2 m³ bevorzugt, wobei es sich bei der Luft um Luft der umgebenden Atmosphäre wie auch um gereinigte Abluft handeln kann. Bei dem erfindungsgemäßen Verfahren ist als Luft gereinigte Abluft bevorzugt, um den Volumenstrom, der in die Umgebung abgegeben wird, zu minimieren und damit die Emissionen zu reduzieren.

Der Begriff "organisch" im Zusammenhang mit den Abgaskomponenten soll im Rahmen dieser Erfindung auch siliciumorganische Komponenten mitumfassen.

Bei dem erfindungsgemäßen Verfahren enthält der Hauptanteil der flüchtigen Stoffe Dₓ-Cylen mit x= 3 bis 10 sowie Hexamethyldisiloxan, Trimethylsilanol und Harze QM₃OH und QM₄. Ferner können bei dem erfindungsgemäßen Verfahren Zerfallsprodukte von Peroxiden entstehen. Art und Menge der beim erfindungsgemäßen Verfahren entstehenden flüchtigen Komponenten sind in erster Linie abhängig von der Zusammensatzung der eingesetzten vernetzbaren Massen.

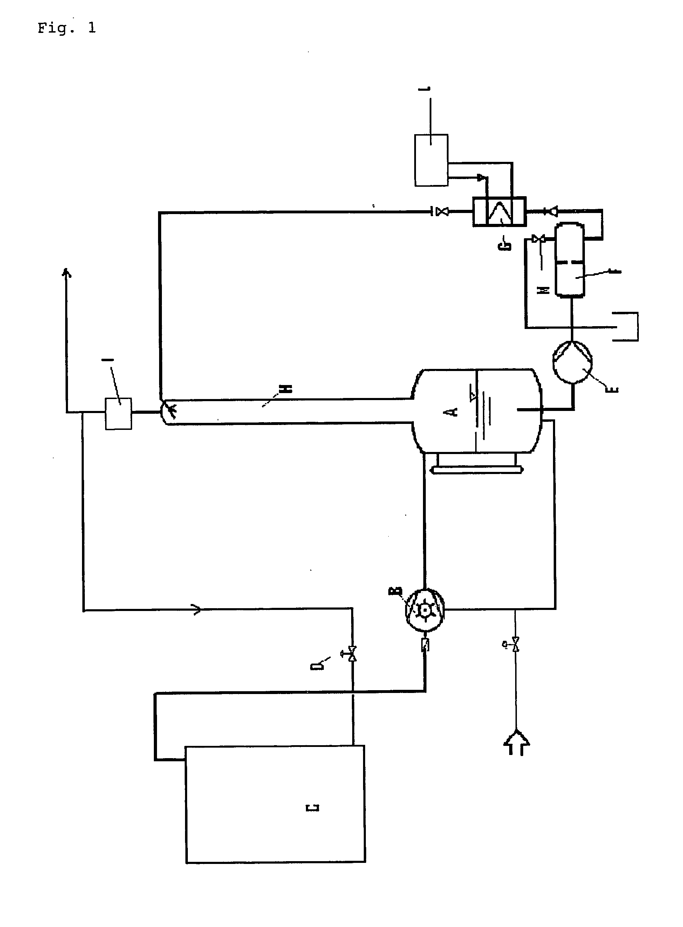

Eine ganz besonders bevorzugte Ausführungsform des erfindungsgemäßen Verfahrens wird anhand von Fig.1 erläutert: Eine Flüssigkeitspumpe (B) ist mit einem Pufferbehälter (A) für Wasser verbunden. Die Pumpe erzeugt durch den Wasserkreislauf einen Unterdruck im Temperofen (C). Das aus dem Ofen (C) abgesaugte Gas, das neben Luft auch organische Bestandteile enthalten kann, wird in der Pumpe (B) innig mit Wasser, das eine Temperatur von bevorzugt 5 bis 20°C hat, vermischt, wodurch ein Großteil der flüchtigen Verbindungen kondensiert. Das bereits abgekühlte Abgas wird durch den Behälter (A) geschleust und über die Waschkolonne (H) und einem Aerosolabscheider (I) der Abgasleitung zugeführt. In der Waschkolonne (H) wird der Abgasstrom nochmals mit Wasser, das eine Temperatur von bevorzugt 3 bis 10°C hat, gewaschen, wodurch die Abluftbeladung nochmals reduziert wird.

Falls erwünscht, kann Stripgas über ein Regelventil (D) dem Ofen (C) zugespeist werden, um flüchtige Bestandteile auszutragen. Das Stripgas wird dazu nach dem Aerosolabscheider (I) aus der Abgasleitung entnommen, so dass der über Dach geführte Abgasstrom und damit die Emissionen minimiert werden können. Im Behälter (A) entsteht ein Gemisch aus Wasser und einer organischen Phase, wobei beide Flüssigkeitsphasen durch die turbulente Strömung permanent vermischt werden. Ein Teilstrom dieses Gemisches wird mittels einer Pumpe (E) permanent aus dem Behälter (A) entnommen und über einen Koaleszor (F) geführt, in dem sich die Wasserphase und die organische Phase gut trennen lassen. Bevorzugt wird anschließend die Wasserphase über einen Wärmetauscher (G) mit Hilfe eines Kühlaggregats (L) abgekühlt und in den Kopf der Kolonne (H) eingespeist. Die organische Phase kann nach Bedarf aus dem Koaleszor (F) über das Ventil (M) abgelassen und einem Recyclingprozess zugeführt werden. Obwohl die Flüssigkeitsringpumpe mit Wasser betrieben wird, fällt kein Abwasser an. Wasserverluste werden bevorzugt mit Frischwasser ersetzt.

Das erfindungsgemäße Verfahren kann kontinuierlich oder diskontinuierlich durchgeführt werden.

Das erfindungsgemäße Verfahren hat den Vorteil, dass es einfach in der Durchführung und sehr sicher ist, da bei den Verfahrensbedingungen selbst bei einer Zündung im Gasraum kein Überdruck entsteht.

Ferner hat das erfindungsgemäße Verfahren den Vorteil, dass mit geringen Luftdurchsätzen gearbeitet werden kann ohne die Sicherheit zu verschlechtern. Auch der Wärmeübergang ist bei dem erfindungsgemäßen Druck vergleichbar wie bei Normaldruck.

Des Weiteren hat das erfindungsgemäße Verfahren den Vorteil, dass die Emissionen mindestens um den Faktor 10 niedriger liegen als bei den herkömmlichen Verfahren gemäß dem Stand der Technik. Der Gesamtenergieverbrauch liegt deutlich niedriger, da nur noch ein geringer Volumenstrom erhitzt werden muss. Ferner können die flüchtigen Bestandteile, die durchaus einen Wertstoff darstellen, zurückgewonnen werden. Ablagerungen im Abgaskamin sind nicht mehr zu erwarten, da in der Waschkolonne in der Regel tiefere Temperaturen herrschen als im Abgaskamin. Die erfindungsgemäße Anlage, wie sie z.B. in Figur 1 dargestellt ist, kann kompakt gebaut werden, so dass aufwändige Installationsarbeiten vorteilhafterweise entfallen.

In den nachfolgenden Beispielen beziehen sich alle Angaben von Teilen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben beziehen sich auf eine Temperatur von 25°C.

Die Shore-A-Härte wird nach DIN (Deutsche Industrie Norm) 53505 (Ausgabe August 2000) bestimmt.

Die Druckverformungsrest wird nach DIN ISO 815 B bestimmt.

### Beispiel 1

Aus einer gießbaren, bei Raumtemperatur vulkanisierenden, additionsvernetzenden Zweikomponenten(RTV-2)-Siliconkautschukmasse (käuflich erhältlich bei der Wacker Chemie AG, Deutschland unter der Bezeichnung ELASTOSIL® M 4601A+B) wurde ein würfelförmiger Kautschukkörper mit einer Kantenlänge von ca. 10 cm dadurch hergestellt, dass 9 Teile der Komponente A in einem Becher mit 1 Teil der Komponente B homogen mittels Laborrührer vermischt wurden. Das Gemisch wurde in eine würfelförmige Form gegossen und der Temperatursensor, der mit einem Schreiber verbunden war, in der Mitte des Würfels positioniert. Um Luftblasen aus dem Gemisch zu entfernen, wurde die gefüllte noch unvernetzte Form im Exsikkator ca. 10 Minuten evakuiert. Über einen Zeitraum von 15 Stunden erfolgte bei Raumtemperatur die Vulkanisation bei einem Druck der umgebenden Atmosphäre.

In einem Vakuumtrockenschrank mit einem Ofenraumvolumen von ca. 100 Liter wurde der so erhaltene Kautschukkörper auf 200°C bei 100 hPa aufgeheizt und die Aufheizgeschwindigkeit des Kautschukkörpers durch Aufzeichnen der Temperaturkurven auf einem Schreiber über mehrere Stunden gemessen. Aufgrund der in der Anlage auftretenden Leckagen betrug der Luftdurchsatz 0,1 bis 1 Nm³/h. Es wurde zum Vergleich das Aufheizen eines weiteren Kautschukkörpers gemessen, wobei das Aufheizen beim Druck der umgebenden Atmosphäre, also bei etwa 1013 hPa (Normaldruck), durchgeführt wurde.

Es zeigte sich, dass die Aufheizgeschwindigkeit der beiden Kautschukkörper gleich schnell war und die Temperaturkurven nahezu deckungsgleich waren (Tabelle 1).

**Tabelle 1**

| **Aufheizgeschwindigkeit bei** | **100 mbar** | **1013 mbar** |
|---|---|---|
| t in min | T in °C | T in °C |
| 10 | 25 | 25 |
| 20 | 30 | 30 |
| 30 | 40 | 45 |
| 40 | 60 | 63 |
| 50 | 80 | 80 |
| 60 | 115 | 116 |
| 70 | 135 | 138 |
| 80 | 160 | 160 |
| 90 | 180 | 183 |
| 100 | 190 | 191 |
| 110 | 196 | 197 |
| 120 | 200 | 200 |
| 130 | 198 | 201 |
| 140 | 200 | 200 |

### Beispiel 2

Aus einer bei 175°C vulkanisierenden, additionsvernetzenden Siliconkautschukmasse (käuflich erhältlich bei der Wacker Chemie AG, Deutschland unter der Bezeichnung ELASTOSIL® LR 3003/40 A+B) wurden eine quadratische Testfolie mit einer Dicke von 2 mm und einer Kantenlänge von 15 cm, wobei ein quadratischer Teilbereich der Folie eine Dicke von 6 mm hat, um die Shore-A-Härte DIN-gerecht messen zu können, dadurch hergestellt, dass mittels Laborrührer die zwei Komponenten A+B im Verhältnis 1:1 gemischt wurden. Diese Mischung wurde in eine Metallform obiger Dimensionen überführt und in einer Laborpresse bei 175°C und einem Druck von 70 bar 5 min lang vulkanisiert.

In einem Vakuumtrockenschrank mit einem Ofenraumvolumen von ca. 100 Liter wurde der so erhaltene Kautschukkörper anschließend bei einem Druck von 100 hPa und 200°C für eine Dauer von 4 Stunden getempert. Aufgrund der in der Anlage auftetenden Leckagen betrug der Luftdurchsatz 0,1 bis 1 Nm³/h. Zum Vergleich wurde ein Probekörper bei sonst gleichbleibenden Bedingungen unter Normaldruck getempert.

Der Hauptanteil der flüchtigen Stoffe sind Dₓ-Cylen mit x= 3 bis 10 sowie Hexamethyldisiloxan, Trimethylsilanol und Harze QM₃OH und QM₄.

Von den so erhaltene Probekörpern wurden sowohl die Shore A-Härte wie auch der Druckverfomrungsrest bestimmt. Die Ergebnisse finden sich in Tabelle 2.

### Beispiel 3

Die in Beispiel 2 beschriebene Verfahrensweise wird wiederholt mit der Abänderung, dass als vernetzbare Masse ein heiß vulkanisierender Siliconkautschuk (käuflich erhältlich bei der Wacker Chemie AG, Deutschland unter der Bezeichnung ELASTOSIL® LR 3003/60 A/B) verwendet wird.

Der Hauptanteil der flüchtigen Stoffe sind Dₓ-Cylen mit x= 3 bis 10 sowie Hexamethyldisiloxan, Trimethylsilanol und Harze QM₃OH und QM₄.

Die Ergebnisse finden sich in Tabelle 2.

### Beispiel 4

Die in Beispiel 2 beschriebene Verfahrensweise wird wiederholt mit der Abänderung, dass als vernetzbare Masse ein heiß vulkanisierender Siliconkautschuk (käuflich erhältlich bei der Wacker Chemie AG, Deutschland unter der Bezeichnung ELASTOSIL® LR 3003/70 A+B) verwendet wird.

Der Hauptanteil der flüchtigen Stoffe sind Dₓ-Cylen mit x= 3 bis 10 sowie Hexamethyldisiloxan, Trimethylsilanol und Harze QM₃OR und QM₄.

Die Ergebnisse finden sich in Tabelle 2.

### Beispiel 5

Die in Beispiel 2 beschriebene Verfahrensweise wird wiederholt mit der Abänderung, dass als vernetzbare Masse ein heiß vulkanisierender Siliconkautschuk (käuflich erhältlich bei der Wacker Chemie AG, Deutschland unter der Bezeichnung ELASTOSIL® LR 3003/80) verwendet wird.

Der Hauptanteil der flüchtigen Stoffe sind Dₓ-Cylen mit x= 3 bis 10 sowie Hexamethyldisiloxan, Trimethylsilanol und Harze QM₃OH und QM₄.

Die Ergebnisse finden sich in Tabelle 2.

**Tabelle 2**

| **Beispiel** | **getempert bei 100 hPa** | | **getempert bei 1013 hPa als Vergleichsbeispiele** | |
|---|---|---|---|---|
| | Shore-A | Druckverformung | Shore-A | Druckverformung |
| 2 | 44 | 15 % | 44 | 15 % |
| 3 | 58 | 18 % | 58 | 13 % |
| 4 | 67 | 22 % | 67 | 13 % |
| 5 | 76 | 26 % | 77 | 17 % |

## Patentansprüche

1. Verfahren zur Herstellung von Formkörpern aus Silikonkautschuk durch Vernetzung von Massen auf der Basis von Organosiliciumverbindungen und anschließendem Tempern der erhaltenen Formkörper, **dadurch gekennzeichnet, dass** das Tempern bei einem Druck von kleiner 150 hPa durchgeführt wird.

2. Verfahren nach Anspruch 1, **dadurch gekennzeichnet, dass** das Tempern bei einem Druck von 10 bis 150 hPa durchgeführt wird.

3. Verfahren nach Anspruch 1 oder 2, **dadurch gekennzeichnet, dass** das Tempern bei einer Temperatur von 20 bis 350°C durchgeführt wird.

4. Verfahren nach einem oder mehreren der Ansprüche 1 bis 3, **dadurch gekennzeichnet, dass** das Tempern in Anwesenheit von Sauerstoff durchgeführt wird.

5. Verfahren nach einem oder mehreren der Ansprüche 1 bis 4, **dadurch gekennzeichnet, dass** das Tempern in Anwesenheit von Luft durchgeführt wird.

6. Verfahren nach einem oder mehreren der Ansprüche 1 bis 5, **dadurch gekennzeichnet, dass** Massen auf der Basis von Organosiliciumverbindungen, ausgewählt aus durch Additionsreaktion vernetzbaren Massen, peroxidisch vernetzbaren Massen sowie strahlungsvernetzbaren Massen vernetzen gelassen und die so erhaltenen Formkörper anschließend bei einem Druck von kleiner 150 hPa und einer Temperatur von 20 bis 350°C getempert werden.

7. Verfahren nach einem oder mehreren der Ansprüche 1 bis 6, **dadurch gekennzeichnet, dass** die Abgase aus dem Temperofen über einen Wasserwäscher gereinigt werden.

8. Verfahren nach einem oder mehreren der Ansprüche 1 bis 7, **dadurch gekennzeichnet, dass** als Waschflüssigkeit kaltes Wasser mit einer Temperatur zwichen 3 und 20°C verwendet wird.

9. Verfahren nach einem oder mehreren der Ansprüche 1 bis 8, **dadurch gekennzeichnet, dass** die organische Phase über einen Koaleszor abgetrennt und das Wasser im Kreis geführt wird.

## Claims

1. Process for producing moldings made of silicone rubber via crosslinking of compositions based on organosilicon compounds and then conditioning of the resultant moldings, **characterized in that** the conditioning is carried out at a pressure smaller than 150 hPa.

2. Process according to Claim 1, **characterized in that** the conditioning is carried out at a pressure of from 10 to 150 hPa.

3. Process according to Claim 1 or 2, **characterized in that** the conditioning is carried out at a temperature of from 20 to 350°C.

4. Process according to one or more of Claims 1 to 3, **characterized in that** the conditioning is carried out in the presence of oxygen.

5. Process according to one or more of Claims 1 to 4, **characterized in that** the conditioning is carried out in the presence of air.

6. Process according to one or more of Claims 1 to 5, **characterized in that** compositions based on organosilicon compounds selected from compositions crosslinkable via an addition reaction, peroxidically crosslinkable compositions, and also radiation-crosslinkable compositions, are allowed to crosslink, and the resultant moldings are then conditioned at a pressure smaller than 150 hPa and at a temperature of from 20 to 350°C.

7. Process according to one or more of Claims 1 to 6, **characterized in that** the exhaust gases from the conditioning oven are scrubbed through a water washer.

8. Process according to one or more of Claims 1 to 7, **characterized in that** the wash liquid used comprises cold water, the temperature of which is from 3 to 20°C.

9. Process according to one or more of Claims 1 to 8, **characterized in that** the organic phase is separated by way of a coalescer and the water is circulated.

## Revendications

1. Procédé pour la production de corps moulés à base de caoutchouc silicone, par réticulation de masses à base de composés organosiliciés et traitement thermique subséquent des corps moulés obtenus, **caractérisé en ce qu'**on effectue le traitement thermique sous une pression inférieure à 150 hPa.

2. Procédé selon la revendication 1, **caractérisé en ce qu'**on effectue le traitement thermique sous une pression de 10 à 150 hPa.

3. Procédé selon la revendication 1 ou 2, **caractérisé en ce qu'**on effectue le traitement thermique à une température de 20 à 350 °C.

4. Procédé selon l'une ou plusieurs des revendications 1 à 3, **caractérisé en ce qu'**on effectue le traitement thermique en présence d'oxygène.

5. Procédé selon l'une ou plusieurs des revendications 1 à 4, **caractérisé en ce qu'**on effectue le traitement thermique en présence d'air.

6. Procédé selon l'une ou plusieurs des revendications 1 à 5, **caractérisé en ce qu'**on fait réticuler des masses à base de composés organosiliciés, choisies parmi des masses réticulables par réaction d'addition, des masses réticulables à l'aide d'un peroxyde, ainsi que des masses réticulables par irradiation et les corps moulés ainsi obtenus sont ensuite traités thermiquement à une température de 20 à 350 °C et sous une pression inférieure à 150 hPa.

7. Procédé selon l'une ou plusieurs des revendications 1 à 6, **caractérisé en ce que** les gaz rejetés provenant du four de traitement thermique sont épurés au moyen d'un laveur à eau.

8. Procédé selon l'une ou plusieurs des revendications 1 à 7, **caractérisé en ce qu'**on utilise comme liquide de lavage de l'eau froide ayant une température comprise entre 3 et 20 °C.

9. Procédé selon l'une ou plusieurs des revendications 1 à 8, **caractérisé en ce que** la phase organique est séparée au moyen d'un coalesceur et l'eau est mise en circuit.
